# EUROPÄISCHE PATENTANMELDUNG

(11) **EP 3 067 762 A1**
(43) Veröffentlichungstag der Anmeldung: **14.09.2016**
(21) Anmeldenummer: 15158360.6
(22) Anmeldetag: 10.03.2015
(51) Int. Cl.: G05B 19/042, G05B 19/4099, G05B 19/4093, G05B 19/4097

(54) **VERFAHREN ZUR BESTIMMUNG EINER OPTIMALEN AUFSPANNPOSITION EINES WERKSTÜCKS IN EINER BEARBEITUNGSMASCHINE**

(71) Anmelder: Siemens Aktiengesellschaft, 80333 München (DE)
(72) Erfinder: Pitz, Thomas, 71263 Weil der Stadt (DE); Spielmann, Ralf, 70569 Stuttgart (DE)

(57) **Zusammenfassung**

Ein Werkstück soll in einer Bearbeitungsmaschine (10) in einer vorgegebenen Aufspannposition mittels eines Ursprungprogramms bearbeitet werden. Die Werkzeugmaschine (10) weist eine Maschinenkinematik mit einer Tischkinematik auf, die mindestens eine Rundachse umfasst. Zur Bestimmung einer optimalen Aufspannposition (15) des Werkstücks in der Werkzeugmaschine (10) wird das Ursprungprogramm (8) zur Steuerung der Werkzeugmaschine (10) bereitgestellt. Es werden eine erste Aufspannposition (16) des Werkstücks in der Werkzeugmaschine (10), eine zu optimierende variable Bearbeitungsgröße (18) und ein Optimierungskriterium (26) für die zu optimierende variable Bearbeitungsgröße vorgegeben. Es wird ein erster Wert (20) der zu optimierenden variablen Bearbeitungsgröße in Abhängigkeit des Ursprungprogramms (8), der ersten Aufspannposition (16) und von festen Größen (12) bestimmt. Ferner wird mindestens eine weitere Aufspannposition (24, 30) des Werkstücks in der Werkzeugmaschine (10) vorgegeben. Es wird mindestens ein weiterer Wert (23, 31) der zu optimierenden variablen Bearbeitungsgröße (20) in Abhängigkeit des Ursprungprogramms (8), der mindestens einen weiteren Aufspannposition (24, 30) und der festen Größen (12) bestimmt. Aus dem ersten und dem mindestens einen weiteren Wert (23, 31) der zu optimierenden Größe wird ein optimaler Wert (22, 42) bestimmt. Aus dem optimalen Wert (42) der zu optimierenden variablen Bearbeitungsgröße und der ersten und der mindestens einen weiteren Aufspannposition wird die optimale Aufspannposition (15) bestimmt. Sie wird zur Bearbeitung des Werkstücks bereitgestellt.

## Beschreibung

Die Erfindung betrifft ein Verfahren zur Bestimmung einer optimalen Aufspannposition eines Werkstücks in einer Bearbeitungsmaschine mit einer Maschinenkinematik, die eine Tischkinematik mit mindestens einer Rundachse umfasst, wobei die Bearbeitungsmaschine das Werkstück in einer vorgegebenen Aufspannposition mittels eines Ursprungprogramms bearbeitet.

Allgemein wird als Bearbeitungsmaschine eine Maschine bezeichnet, die zur Fertigung von Werkstücken mit Werkzeugen dient, wobei Bewegungen von Werkstück und Werkzeug zueinander durch die Maschine vorgegeben werden. Die Bewegung von Werkstück und Werkzeug zueinander wird als Kinematik der Bearbeitungsmaschine bezeichnet.

Beispielhaft für eine Bearbeitungsmaschine soll im Folgenden die Bearbeitung eines Werkstücks bei einer Fräsmaschine genauer betrachtet werden.

Um beliebig im Raum liegende Geometrien zu fräsen oder für Bearbeitungsfälle mit angestellten Werkzeugen sind drei Linearachsen X, Y und Z und noch zwei Rundachsen A, B oder C erforderlich. Die Achsen können im Allgemeinen simultan angesteuert werden. Mit den Linearachsen X, Y und Z wird die Werkzeugposition im Raum angefahren. Die Werkzeugspitze kann damit jede beliebige Position einnehmen. Bei einer derartigen 3-Achs-Bearbeitung erfolgt die Bearbeitung durch Programmierung der drei Linearachsen. Die Kontur wird beispielsweise zeilenweise durch die Bewegung der drei Linearachsen gefräst. Soll das Werkzeug noch in einem Winkel angestellt werden, müssen Rundachsen vorhanden sein. Mit zwei Drehachsen, z. B. B und C, wird die Anstellung des Werkzeugs, d. h. die Werkzeugorientierung verändert. Dies ist notwendig, wenn das Werkzeug zur Bearbeitungsfläche ausgerichtet werden soll oder auch um z. B. beim Umfangsfräsen eine Tasche mit schrägen Wänden zu fräsen.

Bei der Verwendung von Kinematiken, bei denen mindestens eine Rundachse auf den Werkstücktisch wirkt, stellt sich häufig das Problem, dass unterschiedliche Aufspannpositionen des zu fertigenden Werkstücks unterschiedliche Bearbeitungszeiten benötigen. Diese Problematik soll mit dem folgenden Beispiel anschaulich gemacht werden. Ein rotationssymmetrisches Werkstück, beispielsweise eine Halbkugel, soll so mit einem Schaftfräser bearbeitet werden, dass sich der Fräser immer orthogonal zur Oberfläche der Halbkugel befindet. Wird das Werkstück nun auf den Drehmittelpunkt des Tisches aufgespannt, so müssen im Falle einer Rundachse zur Bearbeitung eines Kreises auf der Oberfläche der Halbkugel und im Falle von zwei Rundachsen zur vollständigen Bearbeitung der Oberfläche der Halbkugel sich nur die Rundachsen des Tisches bewegen, die Linearachsen des Werkzeugkopfes können konstant stehen bleiben. Dagegen müssen bei einer außermittigen Aufspannposition die Linearachsen die Bewegungen der Rundachsen ausgleichen, sie müssen also immer dem Werkstück folgen. Diese Ausgleichsbewegungen erhöhen beispielsweise die Bearbeitungszeit oder benötigen zusätzliche Antriebsenergie.

Die Fräsbearbeitung einer Halbkugel ist ein einfaches Beispiel für die Problematik des Einflusses der Aufspannposition auf die Bearbeitung. Hier ist klar ersichtlich, dass die Aufspannposition im Drehmittelpunkt optimal ist. Schwieriger wird die Bestimmung eines Optimums der Aufspannposition bei nicht rotationssymmetrischen Körpern oder bei Freiformflächen.

Das Vorgehen zur Ermittlung einer für die Bearbeitung günstigen Aufspannposition ist bisher derart, dass ein Maschinenbediener verschiedene Aufspannpositionen testet und so eine nach seiner Einschätzung optimale Aufspannposition ermittelt. Wird dieser Test an einer realen Werkzeugmaschine durchgeführt, kann die für den Bediener optimale Aufspannposition zwar sehr genau bestimmt werden, das Vorgehen selbst ist aber zeitaufwändig. Werden die Aufspannposition und die sich daraus ergebenden Bearbeitungszeiten durch eine Simulation am CAD/CAM/PP-System ermittelt, leidet im Allgemeinen die Genauigkeit des Ergebnisses. Die Abkürzungen CAD, CAM und PP stehen für "Computer Aided Design", "Computer Aided Manufacturing" bzw. "Post-Processing".

Der vorliegenden Erfindung liegt die Aufgabe zu Grunde, für die eingangs genannte Bearbeitungsmaschine ein Verfahren bereitzustellen, mit dem eine optimale Aufspannposition eines beliebig geformten Werkstücks in der Bearbeitungsmaschine ohne großen Aufwand und mit großer Genauigkeit bestimmt werden kann.

Die Aufgabe wird durch ein Verfahren mit den Merkmalen des Anspruchs 1 gelöst. Vorteilhafte Ausgestaltungen des erfindungsgemäßen Verfahrens sind Gegenstand der abhängigen Ansprüche 2 bis 15.

Erfindungsgemäß umfasst das Verfahren zur Bestimmung der optimalen Aufspannposition eines Werkstücks in einer Bearbeitungsmaschine der eingangs genannten Art die Schritte:
- Bereitstellen des Ursprungprogramms zur Steuerung der Werkzeugmaschine,
- Vorgeben einer ersten Aufspannposition des Werkstücks in der Werkzeugmaschine,
- Vorgeben einer zu optimierenden variablen Bearbeitungsgröße,
- Vorgeben eines Optimierungskriteriums für die zu optimierende variable Bearbeitungsgröße,
- Bestimmen eines ersten Wertes der zu optimierenden variablen Bearbeitungsgröße in Abhängigkeit des Ursprungprogramms, der ersten Aufspannposition und von festen Größen,
- Vorgeben mindestens einer weiteren Aufspannposition des Werkstücks in der Werkzeugmaschine,
- Bestimmen mindestens eines weiteren Wertes der zu optimierenden variablen Bearbeitungsgröße in Abhängigkeit des Ursprungprogramms, der mindestens einen weiteren Aufspannposition und der festen Größen,
- Bestimmen eines optimalen Wertes aus dem ersten und dem mindesten einen weiteren Wert der zu optimierenden Größe,
- Bestimmen der optimalen Aufspannposition aus dem optimalen Wert der zu optimierenden variablen Bearbeitungsgröße und der ersten und der mindestens einen weiteren Aufspannposition und
- Bereitstellen der optimalen Aufspannposition zur Bearbeitung des Werkstücks.

Die Einführung eines automatischen Optimierungsprozesses zur Bestimmung einer optimalen Aufspannposition erhöht die Genauigkeit der so bestimmten optimalen Aufspannposition und damit auch die Bearbeitungsqualität des Werkstücks.

Neben der eingangs schon erörterten Bearbeitungszeit gibt es weitere variable Bearbeitungsgrößen, die sich in Abhängigkeit der Aufspannposition ändern. Für alle diese Bearbeitungsgrößen können einzeln oder auch in Kombination optimale Aufspannpositionen ermittelt werden. So kann die Aufspannposition beispielsweise für minimale Linearachsbewegungen, für minimale Rundachsbewegungen oder für maximale Achsgeschwindigkeiten optimiert werden.

Die Bearbeitungsmaschine kann eine spanende Werkzeugmaschine, beispielsweise eine Drehmaschine, oder auch eine Laserbearbeitungsmaschine sein.

Bei einer besonders vorteilhaften Ausgestaltung der Erfindung ist die Bearbeitungsmaschine als Fräsmaschine ausgebildet.

Eine besonders vorteilhafte Ausgestaltung der Erfindung zeichnet sich dadurch aus, dass die variable Bearbeitungsgröße Ausgleichsbewegungen der Linearachsen sind und dass das Optimierungskriterium deren Minimierung ist. Damit sind Achsfehler, wie sie z.B. aus Schleppfehlern oder Geometrie-Nichtlinearitäten in den Achsbewegungen herrühren, minimiert. Dies deshalb, da sich Achsfehler umso mehr bemerkbar machen, je größer die Ausgleichsbewegungen sind.

Eine weitere besonders vorteilhafte Ausgestaltung der Erfindung zeichnet sich dadurch aus, dass die variable Bearbeitungsgröße die Gesamtbearbeitungszeit des Werkstücks und das Optimierungskriterium deren Minimierung ist. Die Bearbeitungszeit hat unmittelbar Einfluss auf die Wirtschaftlichkeit der Werkzeugmaschine, da bei einer Minimierung der Bearbeitungszeit der Durchsatz maximiert ist.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein vereinfachtes Ablaufdiagramm der wesentlichen Verfahrensschritte zum Bestimmen einer optimalen Aufspannposition eines Werkstücks in einer Werkzeugmaschine,
- FIG 2: ein Diagramm mit einem interpolierten Verlauf einer variablen Bearbeitungsgröße als Funktion der Aufspannposition in einer Achsrichtung und
- FIG 3: ein Diagramm mit einem approximierten Verlauf einer variablen Bearbeitungsgröße als Funktion der Aufspannposition in einer Achsrichtung.

Zunächst sind einige für die Erläuterung der Erfindung wichtige Begriffe und Zusammenhänge zusammengestellt.

Eine mögliche Aufspannposition des Werkstücks wird durch eine starre Bewegung oder starre Transformation beschrieben. Die starre Transformation umfasst im allgemeinen Fall eine Translation oder Verschiebung und eine Rotation oder Drehung des Werkstück- oder Werkzeugkoordinatensystems, abgekürzt auch mit WKS bezeichnet, bezüglich eines Maschinenkoordinatensystems, abgekürzt mit MKS bezeichnet.

Abhängig von der starren Transformation können sich Bearbeitungsgrößen ändern, die auch als variable Größen bezeichnet werden. Zu den variablen Größen gehören beispielsweise die Bearbeitungszeit, die Gesamtstrecke der Linearachsbewegungen, die Gesamtstrecke der Rundachsbewegungen, die Geschwindigkeiten oder Beschleunigungen oder Rucke in Summe pro Achse. Diese variablen Größen können also bei einer bestimmten Aufspannposition einzeln oder auch in Kombination einen optimalen Wert, also einen Maximalwert oder einen Minimalwert, erreichen. Das Ziel der Optimierung oder ein Optimierungskriterium kann beispielsweise sein, die Bearbeitungszeit zu minimieren. Ebenfalls können bei einer bestimmten Aufspannposition die Bewegungsstrecke, die Beschleunigungen oder die Rucke für einzelne oder mehrere Achsen minimiert sein. Es kann beispielsweise eine Aufspannposition so optimiert werden, dass die Geschwindigkeit für eine einzelne oder auch für mehrere Achsen maximiert ist.

Im Unterschied zu den variablen Größen gibt es auch feste Größen, die während einer Bearbeitung eines Werkstücks unverändert bleiben. Dazu gehören beispielsweise die Geometriebeschreibung des Werkstücks und eine Maschinenbeschreibung, die die Art und den Aufbau der verwendeten Werkzeugmaschine beschreibt. Die Geometriebeschreibung des Werkstücks ist beispielsweise in einem Teileprogramm festgelegt, in dem die abzufahrenden Werkzeugbahnen und zusätzlich die Orientierung des Werkzeugs in Bezug zur Werkstückoberfläche beschrieben sind. Zur Maschinenbeschreibung gehört beispielsweise eine Maschinentransformationsbeschreibung, in der der Zusammenhang zwischen einer Rundachsbewegung und einer dazugehörigen Ausgleichsbewegung der betroffenen Linearachsen angegeben ist. Gleichfalls gehören zur Maschinenbeschreibung Achsbegrenzungen, die minimal und maximal erreichbare Positionswerte einer im Maschinenraum anfahrbaren Achse angeben. Ebenso sind in der Maschinenbeschreibung Umkehrstellen von Rundachsen, an denen sich Nicht-Moduloachsen zurück drehen müssen, um einen programmierbaren Winkel zu erreichen, angegeben. Unter Nicht-Moduloachsen werden Rundachsen verstanden, die sich nicht unendlich oft drehen. Weitere limitierende Faktoren, zu denen beispielsweise Dynamikbegrenzen, wie Geschwindigkeit, Beschleunigung oder Ruck, oder auch Begrenzungen durch den Maschinenraum oder zur Vermeidung von Kollisionen, sind ebenfalls in der Maschinenbeschreibung enthalten.

Diese festen Größen werden teilweise in der Bearbeitungskette CAD-CAM-PP für das Werkstück maschinenspezifisch ermittelt. Andere feste Größen sind beispielsweise direkt durch die verwendete Bearbeitungsmaschine beschrieben und ausschließlich dort direkt in deren Steuerung hinterlegt.

Ohne Beschränkung der allgemeinen Anwendbarkeit des erfindungsgemäßen Verfahrens soll zur Erläuterung von einer Fräsmaschine mit einer Maschinenkinematik ausgegangen werden, die als 5-Achs-Tischkinematik ausgebildet ist. Die Relativbewegung von Werkstück und Werkzeug zueinander wird dabei ausschließlich durch Verfahren und Rotieren des Werkstücktischs mit dem aufgespannten Werkstück bei einem in der Maschine ortsfest gelagerten Werkzeug realisiert. Die Verfahrwege des Werkstücktischs lassen sich beispielsweise durch zeitliche Funktionen in drei orthogonal aufeinander stehenden Raumrichtungen x, y, z und durch Drehung um zwei Rundachsen A und C beschreiben, die sich mit den Koordinatenachsen x bzw. z decken.

Die Geometrie eines zu fertigenden Werkstücks, also dessen Oberflächenformgebung und Abmessungen, wird mittels eines CAD-Systems 2 (CAD = Computer Aided Design) beschrieben. Im nächsten Schritt werden mittels eines CAM-Systems 4 (CAM = Computer Aided Manufacturing) die einzelnen Bearbeitungsschritte des Werkstück-Rohlings, also die einzelnen abzufahrenden Fräsbahnen und die Orientierung des Werkzeugs in Bezug zur Werkstückoberfläche, festgelegt. Grundsätzlich wird dabei auch eine Aufspannposition des Werkstücks festgelegt. Schließlich werden die Bearbeitungsschritte aus dem CAM-System 4 in einem PP-System 6 (PP = Post Processing) in ein Ursprungprogramm 8 transformiert, welches benötigte Steuerbefehle zur Bearbeitung des Werkstücks als Steuerprogramm für eine zu verwendende Fräsmaschine 10 enthält.

Die zur Herstellung des Werkstücks verwendete Fräsmaschine 10 mit den zu verwendenden Werkzeugen bestimmt nicht nur das Ursprungprogramm, sondern auch sogenannte feste Eingangsgrößen 12. Dieser Zusammenhang soll durch die gestrichelten Linien 14 veranschaulicht werden.

Die festen Eingangsgrößen 12 sind Eingabedaten für die Optimierung der Aufspannposition, die während einer Bearbeitung des Werkstücks konstant bleiben. Zu den festen Eingangsgrößen 12 gehört eine Geometriebeschreibung des Werkstücks, wie sie beispielsweise im Ursprungprogramm enthalten ist, und eine Maschinenbeschreibung, die durch zu verwendende Fräsmaschine 10 bestimmt ist. Die Maschinenbeschreibung umfasst eine Maschinentransformationsbeschreibung, Grenzen der Bewegungen in den einzelnen Achsrichtungen, Umkehrstellen der Rundachsen, limitierende Faktoren, usw.

Die Aufspannposition wird durch einen charakteristischen geometrischen Ort oder einen Referenzpunkt an dem Werkstückrohling definiert. Dies kann im CAM-System festgelegt werden. Praktisch wird ein einfach bestimmbarer und messbarer Ort an dem Werkstückrohling ausgewählt. Als Referenzpunkt wird beispielsweise der Ort des Beginns der Bearbeitung durch die Werkzeugmaschine 10 festgelegt.

Das Verfahren zur Bestimmung einer optimalen Aufspannposition 15 des Werkstücks beginnt mit dem Vorgeben oder Festlegen einer ersten Aufspannposition 16 des Werkstücks auf dem Werkstücktisch. Vorgeben oder Festlegen einer ersten Aufspannposition 16 bedeutet, dass Vektorwerte, die die erste Aufspannposition 16 bestimmen oder definieren, als Eingabegröße in den Optimierungsprozess eingehen. Diese Werte können manuell durch einen Anwender oder auch automatisch von einem Computerprogramm vorgegeben werden. Zusätzlich wird eine erste variable Bearbeitungsgröße 18 vorgegeben, die optimiert werden soll, die also zu maximieren oder zu minimieren ist. Unter Benutzung der festen Eingangsgrößen 12 und der ersten Aufspannposition 16 wird ein erster Wert der ersten variablen Bearbeitungsgröße 18 simuliert, siehe Verfahrensschritt 20, und einem Optimierungsprozess 22 zugeführt. Anschließend wird ein zweiter Wert 23 der ersten Bearbeitungsgröße 18 in Abhängigkeit einer zweiten, von der ersten verschiedenen Aufspannposition 24 simuliert. Dies erfolgt ebenfalls mittels des Verfahrensschritts 20. Dieser zweite Wert der ersten variablen Bearbeitungsgröße wird ebenfalls dem Optimierungsprozess 22 zugeführt.

Im einfachsten Fall wird in Abhängigkeit eines vorgegebenen Optimierungskriteriums 26 das Maximum oder Minimum der beiden Werte 20, 23 der ersten variablen Bearbeitungsgröße 18 bestimmt und daraus eine optimale Aufspannposition 15, z.B. in Form einer starren Transformation, bestimmt und für die Werkzeugmaschine 10 bereitgestellt, Verfahrensschritt 28. Die optimale Aufspannposition 15, wie sie durch einen Transformationsvektor beschrieben ist, wird dann zur Aufspannung des Werkstücks in der Werkzeugmaschine 10 verwendet. Da typischerweise das NC-Programm vom CAM-System maschinenunabhängig generiert wird, kann die optimale Aufspannposition 15 in einem Speicher der Steuerung der Werkzeugmaschine 10 gespeichert werden. Dabei ist die optimale Aufspannposition 15 durch die entsprechenden Vektorwerte oder Tupel der starren Transformation beschrieben. Aus diesem Speicher werden dann die Vektorwerte von der Steuerung der Werkzeugmaschine 10 abgerufen und verarbeitet. Alternativ kann die optimale Aufspannposition 15 zurück in das CAM-System 4 gegeben und bei der Erstellung des NC-Programms verwendet. Eine noch genauere Bestimmung der optimalen Aufspannposition 15 lässt sich durch Vorgeben weiterer Aufspannpositionen 30 und der Simulation weiterer Werte 31 der variablen ersten Bearbeitungsgröße erzielen. Diese Werte werden dann wie im Folgenden beschrieben in dem Optimierungsprozess 22 verarbeitet.

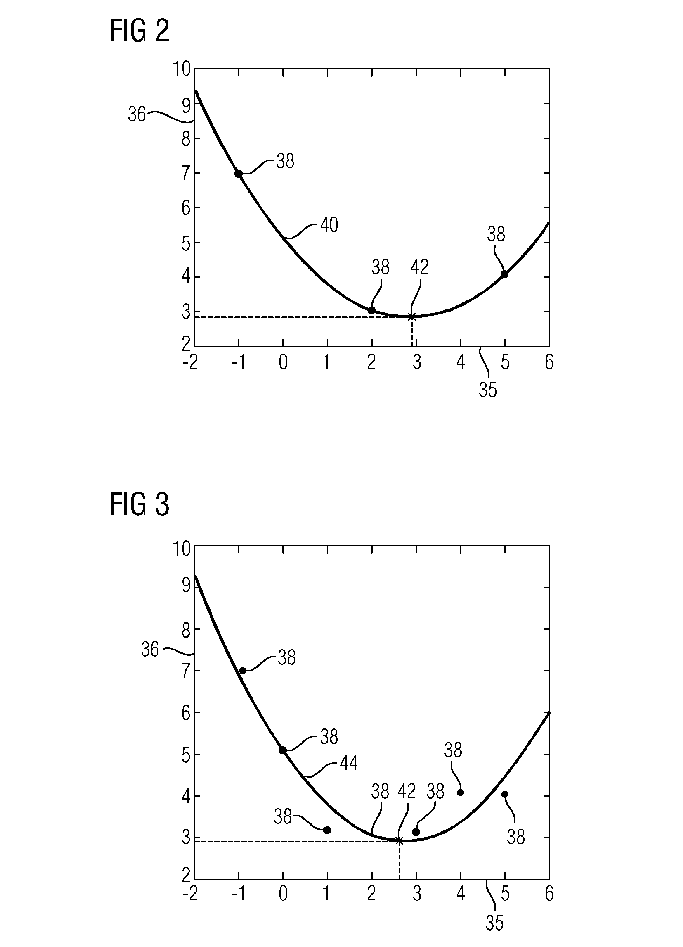

In einer ersten Variante werden jeweils Zwischenwerte zwischen Wertepaaren der simulierten Einzelwerte der ersten variablen Größe durch Interpolation bestimmt, Verfahrensschritt 32. Die Gesamtheit der Einzel- und Zwischenwerte wird dann auf Extremstellen hin untersucht. Die mit dem Extremwert, also das Maximum oder das Minimum entsprechend dem Optimierungskriterium 26, verknüpfte Aufspannposition wird dann als optimale Aufspannposition 15 für die Werkstückbearbeitung bereitgestellt. Dieses Vorgehen wird an einem stark vereinfachten Beispiel nachstehend anhand von FIG 2 erläutert.

In FIG 2 ist ein Koordinatensystem dargestellt, das einen Zusammenhang zwischen der Aufspannposition des Werkstücks und dem sich daraus ergebenden Wert der entsprechenden Bearbeitungsgröße, hier beispielhaft der Linearachsenbewegung, wiedergibt. Auf der Abszisse 35 ist eine Verschiebung der Aufspannposition des Werkstücks von der Nullposition des MKS in x-Achsenrichtung in willkürlichen Einheiten (engl. arbitrary units = au) aufgetragen. In Ordinatenrichtung 36 werden Werte der variablen Größe in y-Richtung ebenfalls in willkürlichen Einheiten aufgetragen, die sich aus der vorgegebenen Aufspannposition und der Simulation 20 ergeben. Vorliegend sind drei Werte 38, die sich aus der Simulation 20 ergeben, eingezeichnet. Hier wurde bei einer Verschiebung um "-1" der Wert "7", bei einer Verschiebung um "+2" der Wert "3" und bei einer Verschiebung um "+5" der Wert "4" berechnet. Diese Werte werden jeweils paarweise durch ein Polynom interpoliert Das Ergebnis ist als Linie 40 in das Diagramm eingezeichnet. Die Extremwertanalyse findet ein Minimum 42 an der Stelle x = 2,89974 mit dem Wert 2,7758. Unter der Annahme, dass die Werte der variablen Bearbeitungsgröße für alle x-Achsenverschiebungen entsprechend auf diesem Polynom liegen, wird durch eine x-Achsenverschiebung des aufgespannten Werkstücks von 2,89974 eine minimale Linearachsen-Bewegung von 2,7758 erreicht.

In den Fällen, in denen die über eine Interpolation bestimmte optimale Aufspannposition 15 nicht genau genug ist, kann das Ergebnis durch ein Approximationsverfahren verbessert werden, wie im folgenden anhand von FIG 3 erläutert wird.

In einer zweiten Variante werden mehrere simulierte Einzelwerte der variablen Größe durch eine Approximationsfunktion angenähert. Ausgehend von dem Beispiel nach FIG 2 sind in FIG 3 weitere Simulationsergebnisse in das Diagramm eingetragen. Insgesamt liegen hier beispielhaft sieben Simulationswerte 38 vor. Anstatt einer Interpolation werden hier alle Werte 38 durch ein Polynom 44 ersetzt, das mittels eines Least-Squares-Verfahrens ermittelt wurde. Die Extremwertanalyse des Polynoms 44 findet ein Minimum 42 an der Stelle x = 2,68829 mit dem Wert von 2,8718.

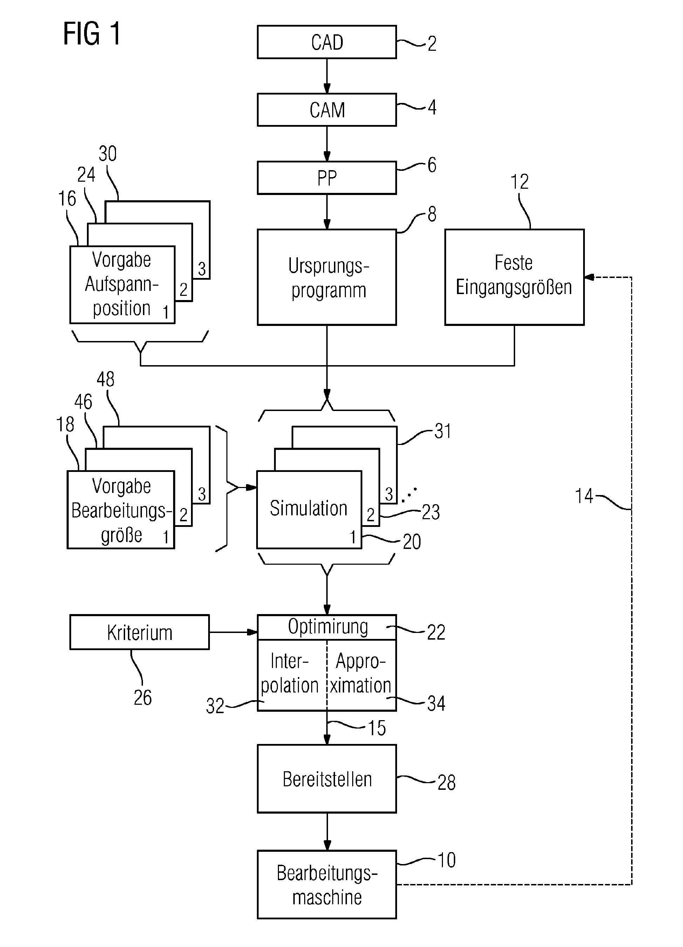

Vorstehend wurde in den FIG 2 und 3 die x-Komponente der optimalen Aufspannposition 15 bestimmt. Die y- und z-Komponenten können durch Vorgeben entsprechender Bearbeitungsgrößen 46, 48 (siehe FIG 1) analog wie vorstehend beschrieben bestimmt werden. Auch hier werden für verschiedene vorgegebene Aufspannpositionen die Werte der Bearbeitungsgrößen 46, 48 bestimmt und dem Optimierungsprozess 22 zugeführt.

Allgemein kann bei der Optimierung der Aufspannposition auf der Grundlage mehrerer variabler Bearbeitungsgrößen die Optimierung für jede Bearbeitungsgröße iterativ nacheinander, für mehrere Bearbeitungsgrößen kombiniert oder in der Gesamtheit der Bearbeitungsgrößen ein Optimum gefunden werden.

Iterativ nacheinander bedeutet, dass zunächst die erste gewählte Bearbeitungsgröße nach einem der oben genannten Optimierungsverfahren optimiert wird. Ist ein Optimum gefunden, wird die erste nun optimale Bearbeitungsgröße festgehalten und mit der nächsten Bearbeitungsgröße weiterverfahren, bis jede Bearbeitungsgröße nacheinander optimiert wurde.

Im Idealfall sind die iterativ zu optimierenden Bearbeitungsgrößen linear unabhängig voneinander, wie beispielsweise die Bestimmung der optimalen Aufspannposition 15 für minimale Linearachsstrecken in den drei Koordinatenrichtungen. In vielen Fällen sind jedoch auch noch optimale Aufspannpositionen 15 verwendbar, wenn die dazu iterativ optimierten variablen Bearbeitungsgrößen nicht unabhängig voneinander sind.

Kombiniert oder in der Gesamtheit bedeutet, dass die gewählten Eingabegrößen als Tupel aufgefasst werden und durch ein multivariantes Polynom interpoliert bzw. approximiert werden.

Die Optimierung der Aufspannposition kann in einer Variante auch mittels eines gemischten Interpolations- und Approximationsverfahrens für einzelne oder kombinierte Eingabegrößen erfolgen.

Das Ergebnis des Optimierungsprozesses 22 ist bzw. sind somit ein oder mehrere Tupel von starren Transformationen, die unter einem Optimierungskriterium 26 die Bearbeitung des Werkstücks verbessern. Als Beispiel ist eine minimale Bearbeitungszeit zu nennen, wodurch Werkstücke schneller gefertigt werden können. Andere Optimierungskriterien 26 können minimale Bewegungen für bestimmte Achsen sein, die dann schonender verfahren werden. Dies kann eine Abnutzung von kostenintensiven Maschinenteilen vermeiden oder auch die Verfahrwege von niedrig-dynamischen Achsen klein zu halten. Dieser bzw. diese Tupel werden CAM-System 4 und/oder dem Werkzeugmaschinenbediener zur optimalen Aufspannung des Werkstückrohlings zur Verfügung gestellt.

Die Simulation der Werte der vorgegebenen variablen Bearbeitungsgrößen und der Optimierungsprozess 22 selbst mit der Bestimmung der optimalen Aufspannposition 15 sowie deren Bereitstellung 38 erfolgt automatisch mit Hilfe eines programmgesteuerten computerisierten Moduls, das entweder als Teil des CAM-Systems 4 oder als Teil der Werkzeugmaschine 10 oder auch als selbstständige Einheit ausgebildet ist. Die Ein- und Ausgabeschnittstellen des Moduls sind entsprechend eingerichtet, die vorstehend beschriebenen Daten mit ihrem Format für die entsprechenden Verfahrensschritte bereit zu stellen.

## Patentansprüche

1. Verfahren zur Bestimmung einer optimalen Aufspannposition (15) eines Werkstücks in einer Bearbeitungsmaschine (10) mit einer Maschinenkinematik, die eine Tischkinematik mit mindestens einer Rundachse umfasst, wobei die Werkzeugmaschine (10) das Werkstück in einer vorgegebenen Aufspannposition mittels eines Ursprungprogramms bearbeitet, mit den Schritten:
- Bereitstellen des Ursprungprogramms (8) zur Steuerung der Werkzeugmaschine (10),
- Vorgeben einer ersten Aufspannposition (16) des Werkstücks in der Werkzeugmaschine (10),
- Vorgeben einer zu optimierenden variablen Bearbeitungsgröße (18),
- Vorgeben eines Optimierungskriteriums (26) für die zu optimierende variable Bearbeitungsgröße,
- Bestimmen eines ersten Wertes (20) der zu optimierenden variablen Bearbeitungsgröße in Abhängigkeit des Ursprungprogramms, der ersten Aufspannposition (16) und von festen Größen (12),
- Vorgeben mindestens einer weiteren Aufspannposition (24, 30) des Werkstücks in der Werkzeugmaschine (10),
- Bestimmen mindestens eines weiteren Wertes (23, 31) der zu optimierenden variablen Bearbeitungsgröße in Abhängigkeit des Ursprungprogramms (8), der mindestens einen weiteren Aufspannposition (24, 30) und der festen Größen (12),
- Bestimmen eines optimalen Wertes (22, 42) aus dem ersten (20) und dem mindesten einen weiteren Wert (23, 31) der zu optimierenden variablen Bearbeitungsgröße,
- Bestimmen der optimalen Aufspannposition (15) aus dem optimalen Wert (42) der zu optimierenden variablen Bearbeitungsgröße und der ersten (16) und der mindestens einen weiteren Aufspannposition (24, 30) und
- Bereitstellen der optimalen Aufspannposition (15) zur Bearbeitung des Werkstücks.

2. Verfahren nach Anspruch 1,
**dadurch gekennzeichnet, dass** die Bearbeitungsmaschine als spanende Werkzeugmaschine (10) ausgebildet ist.

3. Verfahren nach Anspruch 2,
**dadurch gekennzeichnet, dass** die spanende Werkzeugmaschine als Fräsmaschine ausgebildet ist.

4. Verfahren nach einem der vorstehenden Ansprüche,
**dadurch gekennzeichnet, dass** die Maschinenkinematik drei Linearachsen umfasst.

5. Verfahren nach einem der vorstehenden Ansprüche,
**dadurch gekennzeichnet, dass** die Tischkinematik eine zweite Rundachse umfasst.

6. Verfahren nach Anspruch 5,
**dadurch gekennzeichnet, dass** die Tischkinematik eine dritte Rundachse umfasst.

7. Verfahren nach einem der vorstehenden Ansprüche,
**dadurch gekennzeichnet, dass** mindestens drei Aufspannpositionen (16, 24, 30) des Werkstücks in der Werkzeugmaschine (10) vorgegeben werden und dass für jede vorgegebene Aufspannposition (16, 24, 30) des Werkstücks (10) ein Wert der zu optimierenden variablen Bearbeitungsgröße bestimmt wird (20).

8. Verfahren nach Anspruch 7,
**dadurch gekennzeichnet, dass** das Bestimmen des optimalen Wertes der zu optimierenden variablen Bearbeitungsgröße und der optimalen Aufspannposition (15) mittels eines Interpolationsverfahrens (32) erfolgt.

9. Verfahren nach Anspruch 7,
**dadurch gekennzeichnet, dass** das Bestimmen des optimalen Wertes der zu optimierenden variablen Bearbeitungsgröße und der optimalen Aufspannposition (15) mittels eines Approximationsverfahrens (34) erfolgt.

10. Verfahren nach einem der Ansprüche 7 bis 9,
**dadurch gekennzeichnet, dass** mindestens eine weitere zu optimierende variable Bearbeitungsgröße vorgegeben (46, 48) wird und dass die optimale Aufspannposition (15) iterativ aus den optimalen Werten und den dazugehörigen Aufspannpositionen bestimmt wird.

11. Verfahren nach einem der Ansprüche 7 bis 9,
**dadurch gekennzeichnet, dass** mindestens eine weitere zu optimierende variable Bearbeitungsgröße (46, 48) vorgegeben wird und dass die optimale Aufspannposition (15) aus einer Kombination der zu optimierenden variablen Bearbeitungsgrößen bestimmt wird.

12. Verfahren nach einem der vorstehenden Ansprüche,
**dadurch gekennzeichnet, dass** die zu optimierende variable Bearbeitungsgröße Ausgleichsbewegungen der Linearachsen sind und das Optimierungskriterium deren Minimierung ist.

13. Verfahren nach einem der vorstehenden Ansprüche,
**dadurch gekennzeichnet, dass** die zu optimierende variable Bearbeitungsgröße die Gesamtbearbeitungszeit des Werkstücks und das Optimierungskriterium deren Minimierung ist.

14. Verfahren nach einem der vorstehenden Ansprüche,
**dadurch gekennzeichnet, dass** die zu optimierende variable Bearbeitungsgröße eine Strecke der Linearachsbewegungen in mindestens einer Richtung des Werkstücks und das Optimierungskriterium deren Minimierung ist.

15. Verfahren nach einem der vorstehenden Ansprüche,
**dadurch gekennzeichnet, dass** die zu optimierende variable Bearbeitungsgröße eine Strecke der Rundachsbewegungen um mindestens eine Rundachse des Werkstücks und das Optimierungskriterium deren Minimierung ist.
